# EUROPÄISCHE PATENTSCHRIFT

(11) **EP 4 010 765 B1**
(45) Veröffentlichungstag und Bekanntmachung des Hinweises auf die Patenterteilung: **05.11.2025**
(21) Anmeldenummer: 20780957.5
(22) Anmeldetag: 15.09.2020
(51) Int. Cl.: G05B 17/02, G05B 19/418

(54) **SYSTEM UND VERFAHREN ZUM BEREITSTELLEN EINER DIGITALEN NACHBILDUNG EINER ANLAGE UND ENTSPRECHENDES COMPUTERPROGRAMMPRODUKT**
SYSTEM AND METHOD FOR PROVIDING A DIGITAL SIMULATION OF AN INSTALLATION, AND CORRESPONDING COMPUTER PROGRAM PRODUCT
SYSTÈME ET PROCÉDÉ DE FOURNITURE D'UNE SIMULATION NUMÉRIQUE D'UNE INSTALLATION, ET PRODUIT-PROGRAMME D'ORDINATEUR CORRESPONDANT

(30) Priorität: 19.09.2019 DE 102019214273
(43) Veröffentlichungstag der Anmeldung: 15.06.2022
(73) Patentinhaber: Siemens Energy Global GmbH & Co. KG, 81739 München (DE)
(72) Erfinder: KONNOV, Alexei, 76187 Karlsruhe (DE); DE SOUZA, Arthur Rosa, 15061850 São José do Rio Preto, São Paulo (BR)
(86) Internationale Anmeldenummer: PCT/EP2020/075757
(87) Internationale Veröffentlichungsnummer: WO 2021/052955

(56) Entgegenhaltungen:
- EP-A1- 2 897 011
- SCHWEIGER, GERALD: "Modeling Technical Systems [716.055]", 1 January 2017 (2017-01-01), XP055756034, Retrieved from the Internet <URL:http://www.ist.tugraz.at/_attach/Publish/Motes/ModellingModelica_1.pdf>
- ADRIAN POP ET AL: "ModelicaXML: A Modelica XML Representation with Applications", PROCEEDINGS OF THE 3 RD INTERNATIONAL MODELICA CONFERENCE, 3 November 2003 (2003-11-03), XP055756047, Retrieved from the Internet <URL:https://modelica.org/events/Conference2003/papers/h39_Pop.pdf> [retrieved on 20201202]

## Beschreibung

Die vorliegende Erfindung betrifft ein System und ein Verfahren jeweils zum Bereitstellen einer digitalen Nachbildung einer technischen Anlage sowie ein entsprechendes Computerprogrammprodukt.

Viele technische Anlagen sind heutzutage so komplex, dass zu ihrer fehlerfreien Bedienung und Instandhaltung ein umfangreiches Training jeweiligen Bedienpersonals unerlässlich ist. Dabei ergeben sich jedoch oftmals Schwierigkeiten. So ist ein Training an der jeweiligen Anlage selbst, beispielsweise in einem Simulations- oder Trainingsbetrieb der Anlage, oftmals aus Zeit- und Kostengründen nicht praktikabel möglich. Dies ist beispielsweise darin begründet, dass während eines solchen Trainings die Anlage nicht produktiv arbeiten oder betrieben werden kann und für zahlreiche Prozesse während des Trainings Wartezeiten anfallen, beispielsweise zum Hoch- und Herunterfahren der Anlage, zum Abkühlen von Komponenten und/oder dergleichen mehr, die oftmals keinen signifikanten Beitrag zum Trainingserfolg leisten.

Prinzipiell wäre es möglich, eine zweite Anlage zu bauen, an der das Training stattfinden kann, während die ursprüngliche Anlage sich im ununterbrochenen produktiven Einsatz befindet. Dies ist jedoch aufgrund des damit verbundenen Aufwandes typischerweise ebenfalls nicht praktikabel.

Ein Training des Bedienpersonals in einem separaten Trainings- oder Schulungszentrum ist oftmals insofern schwierig, als dort ein anlagenspezifisches Training ohne erheblichen Aufwand oftmals nicht nachzubilden ist und das zu trainierende Personal während des Trainings und zusätzlich für An- und Abreisezeiten zu dem Trainingszentrum dann von der eigentlichen Anlage abwesend ist. Letzteres ist oftmals unerwünscht, da während solcher Zeiten die Anlage gegebenenfalls nicht oder nicht mit voller Effizienz oder Sicherheit betrieben werden kann oder von einem jeweiligen Anlagenbetreiber vorübergehend zusätzliches Personal eingestellt werden muss, das jedoch gegebenenfalls nicht ausreichend mit der Anlage vertraut ist und daher ebenfalls trainiert oder geschult werden müsste.

EP 2 897 011 A1 offenbart ein System zur Simulation einer automatisierten Industrieanlage, wobei Teilmodelle in einer Bibliothek vorhanden sind. Die Teilmodelle sind mittels Verknüpfung auf das eigentliche echte Anlagenmodell abbildbar, wobei die Teilmodelle jeweils mit einem Berechnungsalgorithmus oder einer mathematischen Gleichung nachgebildet werden. Das System kann für Trainingszwecke genutzt werden.

Schweiger, Gerald: "Modeling Technical Systems", http:// www.ist.tugraz.at/_attach/Publish/Motes/ModellingModelica_1.pdf, offenbart die Modellierungsprache Modelica, welche eine hierarchische Struktur verwendet.

"ModelicaXML: A Modelica XML Representation with Applications", Proceedings of the 3 rd International Modelica Conference, 3. November 2003, offenbart einen Parser für Modelica.

Gerade vor dem Hintergrund einer absehbaren Zunahme der Komplexität zukünftig eingesetzter technischer Anlagen und der damit einhergehenden gesteigerten Anforderungen an jeweiliges Bedienpersonal besteht also Bedarf dafür, ein Training von Bedienpersonal auf möglichst effiziente und aufwandsarme Weise zu ermöglichen.

Aufgabe der vorliegenden Erfindung ist es, eine im Vergleich zu bisherigen Ansätzen verbesserte Trainingsmöglichkeit für Bedienpersonal einer Anlage zu schaffen. Diese Aufgabe wird erfindungsgemäß durch die Gegenstände der unabhängigen Patentansprüche gelöst. Vorteilhafte Ausgestaltungen und Weiterbildungen der vorliegenden Erfindung sind in den abhängigen Patentansprüchen, in der Beschreibung und in den Figuren angegeben.

Ein erfindungsgemäßes System dient, ist also eingerichtet zum Bereitstellen einer digitalen oder virtuellen Nachbildung wenigstens eines Teils einer Anlage für ein virtuelles Training. Mittels des Systems kann mit anderen Worten also ein digitaler oder virtueller Zwilling einer technischen Anlage oder eines Teils der Anlage bereitgestellt werden, an dem dann jeweiliges Bedienpersonal trainiert oder geschult werden kann. Die digitale Nachbildung kann die reale Anlage dabei, beispielsweise je nach Bedarf und Anwendungsfall, vollständig oder teilweise nachbilden. Die digitale Nachbildung kann beispielsweise eine virtuelle Trainingsumgebung bilden oder darstellen oder Teil einer solchen virtuellen Trainingsumgebung sein oder zur Integration in eine solche ausgebildet sein.

Das erfindungsgemäße System weist einen computerlesbaren Datenspeicher auf. In diesem Datenspeicher ist zumindest eine Basisklasse gespeichert, die geräteunabhängig Funktionen sowie gegebenenfalls weitere Eigenschaften elementarer Hardwarekomponenten, die in unterschiedlichen Geräten verwendbar sind, implementiert. Elementare Hardwarekomponenten im Sinne der vorliegenden Erfindung sind dabei einzelne Komponenten oder Bauteile, wie beispielsweise Bedienelemente, Schalter, Hebel, Indikatoren, Lampen, Anzeigen, Anschlüsse oder Ports, Eingangs- und Ausgangsschnittstellen, elektrische Sicherungen, elektrische Leitungen, Datenleitungen und/oder dergleichen mehr.

Weiter ist in dem Datenspeicher eine Bibliothek von virtuellen Geräten oder Baugruppen gespeichert, von denen zumindest eines wenigstens eine der elementaren Hardwarekomponenten einbindet oder umfasst. Die virtuellen Geräte bilden eine Topologie und ein funktionales Verhalten entsprechender realer Geräte deterministisch nach. Die virtuellen Geräte können also ein reales Verhalten entsprechender physischer Geräte emulieren oder simulieren. Ein Gerät im Sinne der vorliegenden Erfindung ist dabei eine Zusammenstellung oder ein Verbund mehrerer funktionaler Teile oder Elemente, beispielsweise jeweils einer oder mehrerer elementarer Hardwarekomponenten und/oder weiterer Geräte.

Dass die virtuellen Geräte das funktionale Verhalten der entsprechenden realen Geräte nachbilden oder implementieren bedeutet hier, dass zumindest bezüglich ihrer bestimmungsgemäßen Funktionalität die virtuellen Geräte die gleichen Reaktionen oder Effekte zeigen wie ihre realen Gegenstücke, wenn sie mit den gleichen Eingangssignalen oder Daten beaufschlagt oder versorgt werden. Beispielsweise können die virtuellen Geräte entsprechende Schaltvorgänge, Funktionsabläufe, Berechnungen, Signalausgaben und/oder dergleichen mehr virtuell oder digital nachbilden beziehungsweise ausführen. Dabei muss jedoch das jeweilige reale Gerät nicht zwangsläufig bis ins letzte Detail nachgebildet sein. Beispielsweise kann ein virtuelles Gerät eine Funktionalität oder einen Vorgang repräsentieren, ohne sämtliche inneren Details oder Teilvorgänge, die das entsprechende reale Gerät dabei ausführen würde, die jedoch für einen jeweiligen Benutzer oder ein jeweiliges Bedienpersonal nicht sichtbar oder erkennbar sind, zu simulieren. Beispielsweise können Vorgänge, wie etwa ein Hochfahren (Booten) eines virtuelles Geräts abgekürzt werden, indem beispielsweise auf eine Simulation mechanischer Eigenschaften von Komponenten des Geräts, wie beispielsweise optischer Laufwerke oder Festplatten, verzichtet wird und stattdessen der jeweilige Vorgang, hier also beispielsweise das Booten, ohne Wartezeit durch einen entsprechenden Statusoder Zustandswechsel repräsentiert wird. Ebenso muss beispielsweise ein virtueller Prozessor hier nicht jeden einzelnen Transistor des entsprechenden realen Prozessors simulieren, sondern kann die Funktionalität beziehungsweise das funktionale Verhalten des gesamten Prozessors abstrahieren. Auf diese Weise können die virtuellen Geräte und deren Implementierung des funktionalen Verhaltens der entsprechenden realen Geräte vorteilhaft mit vermindertem Aufwand realisiert werden und dennoch die realen Geräte auf einem funktionalen Niveau realistisch repräsentieren.

Die virtuellen Geräte weisen vorliegend eine hierarchisch verschachtelte Struktur auf, sodass ein hierarchisch höheres Gerät wenigstens ein hierarchisch niedrigeres Gerät und/oder wenigstens eine der elementaren Hardwarekomponenten umfasst. In letzterem Fall kann die elementare Hardwarekomponente insbesondere durch Verweis auf die Basisklasse eingebunden sein. Insbesondere ein Gerät der niedrigsten oder untersten Hierarchieebene kann eine oder mehrere der elementaren Hardwarekomponenten umfassen, also einbinden oder aus diesen aufgebaut sein. Hierarchisch höhere Geräte können insbesondere zumindest ein hierarchisch niedrigeres Gerät umfassen, wobei auch solche hierarchisch höheren Geräte zusätzlich eine oder mehrere der elementaren Hardwarekomponenten einbinden oder umfassen können.

Sowohl die Basisklasse als auch die Bibliothek der virtuellen Geräte können hier Teil eines Computerprogramms sein.

Das erfindungsgemäße System ist dazu eingerichtet, die digitale Nachbildung jeweils an ein vorgegebenes Trainingsszenario angepasst dynamisch aus den virtuellen Geräten und/oder den elementaren Hardwarekomponenten zu generieren, also zusammenzusetzen oder aufzubauen. Dass die Nachbildung an das jeweilige Trainingsszenario angepasst generiert wird, kann hier insbesondere bedeuten, dass dabei jeweils nur die tatsächlich gemäß dem Trainingsszenario benötigten der virtuellen Geräte geladen oder verwendet werden. Mit anderen Worten muss also nicht für jedes Trainingsszenario und für jede digitale Nachbildung die Gesamtheit aller virtuellen Geräte und elementaren Hardwarekomponenten verwendet werden, also beispielsweise nicht die gesamte Anlage nachgebildet werden, die mittels des erfindungsgemäßen Systems für Trainingszwecke nachgebildet werden kann. Welche der virtuellen Geräte und/oder Hardwarekomponenten in welcher Weise bei dem Generieren der digitalen Nachbildung jeweils geladen oder verwendet werden, kann dabei einzelfall- oder anwendungsbedingt sein, also von dem vorgegebenen Trainingsszenario abhängen und/oder sich je nach nachzubildender Anlage unterscheiden.

Durch dieses angepasste dynamische Generieren der digitale Nachbildung jeweils für ein bestimmtes vorgegebenes Trainingsszenario kann vorteilhaft eine Handhabung der digitalen Nachbildung vereinfacht, also mit weniger Berechnungsaufwand und damit mit weniger teurer Berechnungshardware ermöglicht werden. Zudem kann durch das angepasste Generieren der digitalen Nachbildung stets vorteilhaft eine anlagenspezifische digitale Nachbildung geschaffen werden, die ein in Bezug auf die reale Anlage besonders realistisches und relevantes Training des jeweiligen Bedienpersonals ermöglicht, da die digitale Nachbildung genau derjenigen realen Anlage und/oder einem an dieser Anlage auftretenden realen Szenario entsprechen kann, die beziehungsweise das von dem Bedienpersonal auch in der Realität, also physisch real vorgefunden werden kann. Besonders vorteilhaft ist dabei, dass nicht für jede Anlage und/oder für jedes Trainingsszenario manuell eine statische digitale Nachbildung erzeugt werden muss. Stattdessen bietet das erfindungsgemäße System aufgrund der dynamischen Generierung der digitalen Nachbildung eine signifikant vereinfacht Anpassbarkeit und eine signifikant verbesserte Flexibilität, sodass beispielsweise unterschiedliche Trainingsszenarien, unterschiedliche Anlagen und/oder unterschiedliche Zustände der jeweiligen Anlage mit deutlich geringerem Aufwand und deutlich schneller und einfacher realisiert und bereitgestellt werden können als dies mit bisherigen Methoden möglich ist.

Zum Generieren der digitalen Nachbildung kann, beispielsweise als Teil eines in dem Datenspeicher gespeicherten Programmcodes oder Computerprogramms, ein Szenen- oder Szenario-Konstruktor, also eine Softwarekomponente oder ein Teilprogramm vorhanden sein, dass diese Funktionalität implementiert. Erfindungsgemäß umfasst das System einen Parser, der dazu eingerichtet ist, eine das vorgegebene Trainingsszenario und/oder die nachzubildende Anlage beschreibende Datei oder Projektierung auszulesen und daraus automatisch eine Liste der jeweiligen für das Trainingsszenario benötigten und/oder in der Anlage enthaltenen Geräte und/oder Hardwarekomponenten mit hierarchischer Struktur oder Ordnung zu erzeugen. Durch den Parser kann hier also eine hierarchisch strukturierte oder geordnete Liste oder eine Liste der hierarchisch strukturierten oder geordneten Geräte und/oder Hardwarekomponenten erzeugt werden. Eine derartige Liste stellt vorteilhaft eine besonders einfach zum Generieren der digitalen Nachbildung weiter verwendbare Ressource dar. Durch einen derartigen Parser können vorteilhaft manueller Arbeitsaufwand und damit Zeit und Kosten eingespart werden. Die entsprechende Datei oder die Projektierung für die Anlage oder das Trainingsszenario kann beispielsweise manuell erzeugt werden, etwa mittels eines entsprechenden Planungsoder Engineering-Systems, aus dem heraus die Datei, bevorzugt im XML-Format, exportiert werden kann.

Die vorliegende Erfindung ermöglicht oder vereinfacht es, eine digitale Trainingsumgebung für ein virtuelles Training an einer digital nachgebildeten, also emulierten oder simulierten, Anlage zu erzeugen und bereitzustellen. Dazu kann das erfindungsgemäße System beispielsweise einen mit dem Datenspeicher verbundenen Prozessor zum Verarbeiten von auf dem Datenspeicher gespeichertem Programmcode oder einem in dem Datenspeicher gespeicherten Computerprogramm aufweisen.

Das erfindungsgemäße System kann ein Hardwaresystem, beispielsweise ein Computer oder dergleichen, sein. Ebenso kann das System aber ganz oder teilweise digital sein, also in Form von Daten oder Programmcode vorliegen, wobei der Datenspeicher dann beispielsweise eine Datei, ein Datencontainer oder dergleichen sein kann. Dass das System dazu eingerichtet ist, die digitale Nachbildung zu generieren kann dann bedeuten, dass das System eine entsprechende Funktionalität implementiert. Die generierte digitale Nachbildung der Anlage kann beispielsweise in dem Datenspeicher oder in einem anderen Datenspeicher abgelegt, beispielsweise in einen flüchtigen Arbeitsspeicher geladen und/oder über eine Hardware- oder Software-Ausgabeschnittstelle ausgegeben werden.

Anhand der digitalen Nachbildung beziehungsweise einer diese verwendenden digitalen oder virtuellen Trainingsumgebung ist vorteilhaft ein anlagenspezifisches Training zumindest nahezu ortsunabhängig möglich, sodass für das Training jeweiliges Bedienpersonal der realen Anlage diese beispielsweise nicht verlassen muss. Durch die vorliegende Erfindung kann also eine Relevanz und Intensität sowie Qualität des Trainings und damit letztlich eine Kompetenz des jeweiligen Bedienpersonals auf besonders einfache und kostengünstige Weise verbessert und die Praktikabilität der Anwendung oder Nutzung des Trainings erhöht werden.

In vorteilhafter Ausgestaltung der vorliegenden Erfindung ist gemäß der hierarchischen Struktur der virtuellen Geräte jedes virtuelle Gerät mit den ihm hierarchisch übergeordneten und untergeordneten Geräten verknüpft soweit diese vorhanden oder vorgesehen sind. Dabei sind über diese Verknüpfungen Signale zwischen Geräten unterschiedlicher Hierarchieebenen übertragbar oder austauschbar. Mit anderen Worten können die virtuellen Geräte also jeweilige Anknüpfungspunkte oder Zeiger oder virtuelle Schnittstellen aufweisen, über die eine Verbindung und damit eine Datenübertragung zu anderen Geräten oder Hardwarekomponenten beziehungsweise eine Kommunikation möglich ist. Eine tatsächliche Verbindung der virtuellen Geräte miteinander kann dabei zumindest in der digitalen Nachbildung etabliert sein. Wenn für die digitale Nachbildung also beispielsweise nicht alle der in der Bibliothek hinterlegten virtuellen Geräte verwendet werden, besteht keine Verbindung zwischen den tatsächlich in der digitalen Nachbildung verwendeten und den darin jeweils nicht verwendeten und lediglich in der Bibliothek hinterlegten virtuellen Geräten.

Durch die hier vorgesehene hierarchische Signalübertragungsoder Kommunikationsstruktur lässt sich die reale Anlage vorteilhaft besonders einfach, genau und logisch konsistent nachbilden. Zudem kann das funktionale Verhalten nicht nur einzelner virtueller Geräte, sondern der aus mehreren digitalen Geräten zusammengesetzten digitalen Nachbildung insgesamt auf diese Weise besonders realistisch implementiert oder abgebildet werden. Das Gesamtverhalten der Anlage kann dabei, beispielsweise aufgrund von Abhängigkeiten und Verknüpfungen, deutlich komplexer sein als das Verhalten aller einzelnen virtuellen Geräte. Beispielsweise kann ein Fehler in einer Hardwarekomponenten oder einem virtuellen Gerät über die Verbindungen oder Verknüpfungen in der hierarchischen Struktur nach oben weitergeleitet oder kommuniziert oder kaskadiert werden, sodass ein hierarchisch höheres Gerät, welches auf das korrekte Funktionieren des fehlerhaften virtuellen Geräts angewiesen ist, seinerseits einen entsprechenden Fehler oder sein nicht bestimmungsgemäßes Funktionieren signalisieren kann. Auf diese Weise können auch komplexe Situationen, Funktionalitäten und Abhängigkeiten mit verhältnismäßig geringem Aufwand korrekt abgebildet oder nachgebildet werden.

In weiterer vorteilhafter Ausgestaltung der vorliegenden Erfindung ist für jedes virtuelle Gerät individuell festgelegt, wie es auf Signale, die es von den ihm hierarchisch übergeordneten Geräten und/oder den ihm hierarchisch untergeordneten Geräten empfängt, reagiert und auf welche derartigen Signale es reagiert. Mit anderen Worten sind in dem erfindungsgemäßen System also Parent-Child- und Message-Subscription-Prinzipien implementiert. Dies ermöglicht eine besonders robuste und gleichzeitig mit verhältnismäßig geringem Aufwand zu implementierende Möglichkeit, korrekt funktionierende digitale Nachbildungen unterschiedlicher Ausgestaltungen oder Varianten der Anlage oder sogar unterschiedlicher Anlagen zu realisieren. Beispielsweise kann durch die hierarchische Struktur für jedes virtuelle Gerät klar definiert und begrenzt sein, welche Signale es überhaupt empfangen kann und gegebenenfalls ausgeben oder weiterleiten muss. So muss vorteilhaft nicht für jedes virtuelle Gerät eine Reaktion auf jedes in der Anlage auftretende Signal implementiert werden, beispielsweise wenn ein bestimmtes Signal in einem Zweig oder Ast der hierarchischen Struktur, in dem sich ein bestimmtes virtuelles Gerät befindet, nicht auftreten oder an das jeweilige virtuelle Gerät übermittelt werden kann.

Zudem kann so eine Komplexität der digitalen Nachbildung reduziert werden, da beispielsweise keine direkten Verbindungen jeden virtuellen Geräts und/oder jeder elementaren Hardwarekomponenten zu jedem anderen virtuellen Gerät und/oder jeder anderen elementaren Hardwarekomponenten realisiert oder implementiert werden müssen. Stattdessen kann beispielsweise ein von einem ersten virtuellen Gerät erzeugtes Signal, das für ein diesem hierarchisch untergeordnetes, aber durch wenigstens eine Hierarchieebene getrenntes virtuelles Gerät bestimmt ist, durch ein hierarchisch dazwischenliegendes virtuelles Geräts durchoder weitergeleitet werden.

In weiterer vorteilhafter Ausgestaltung der vorliegenden Erfindung verwendet das erfindungsgemäße System das Dokumenten-Objekt-Modell (DOM) zum Implementieren der hierarchischen Struktur der virtuellen Geräte. Damit können die virtuellen Geräte beispielsweise als verschachtelte Container repräsentiert werden. Das DOM ermöglicht vorteilhaft eine einheitliche, also nicht hardware- oder anlagenspezifische Implementierung beispielsweise von Verhaltensskripten für alle relevanten Hardwarekomponenten beziehungsweise Geräte. Das DOM stellt vorteilhaft unter anderem eine robuste Möglichkeit dar, Dokumente zu erzeugen, zu verwalten, hinzuzufügen, zu entfernen oder zu modifizieren und eine verschachtelte oder hierarchische Struktur anzulegen und darin zu navigieren und kann dabei eine große Bandbreite unterschiedlicher Daten handhaben. "Dokumente" sind dementsprechend hier im weitesten Sinne zu verstehen und können auch Dateien, Elemente oder Informationen sein oder umfassen, die typischerweise eher als Daten und nicht als Dokumente im klassischen Sinne bezeichnet werden können.

Es hat sich herausgestellt, dass das DOM zum Nachbilden auch komplexer technischer Anlagen und von Beziehungen und Abhängigkeiten zwischen deren einzelnen Geräten und Hardwarekomponenten besonders geeignet ist, da es selbst bereits eine ähnliche hierarchische Struktur vorsieht und einen Aufbau sowie ein Anpassen der Struktur beziehungsweise der darauf basierend erzeugten digitalen Nachbildung auch dynamisch und flexibel direkt ermöglicht.

In weiterer vorteilhafter Ausgestaltung der vorliegenden Erfindung ist das funktionale Verhalten der virtuellen Geräte - und gegebenenfalls der elementaren Hardwarekomponenten - durch ein jeweiliges Skript, also ein Verhaltens-Script, implementiert, wobei in den Scripten eine Reaktion des jeweiligen Geräts auf ein an dieses Gerät gesendetes Signal beschrieben sind. Ein Signal in diesem Sinne kann beispielsweise eine Anweisung, eine Übermittlung von Daten, ein Ereignis und/oder dergleichen mehr sein oder anzeigen. Reaktionen auf derartige Signale können beispielsweise ein Auslösen eines Schaltvorgangs, ein Ansteuern einer Hardwarekomponente oder eines weiteren virtuellen Geräts, ein Weiterleiten des Signals an die nächste Hierarchieebene, ein Aktivieren oder Deaktivieren einer Hardwarekomponenten oder eines virtuellen Geräts, ein Wechseln eines Zustands oder Status, ein Erzeugen eines Antwortsignals und/oder dergleichen mehr sein oder umfassen. Die Verwendung von Skripten, also in einer Skriptsprache geschriebenen Dateien oder Programmen, zum Implementieren des Verhaltens hat sich als besonders vorteilhaft herausgestellt, beispielsweise da hier Abhängigkeiten, Aufrufe und Zugriffe anderer Programmteile, die beispielsweise andere Hardwarekomponenten und/oder andere virtuelle Geräte repräsentieren, sowie eine flexible und dynamische Anpassung des Verhaltens inhärent vorgesehen, also besonders einfach zu realisieren sind.

In weiterer vorteilhafter Ausgestaltung der vorliegenden Erfindung umfasst das System für jedes virtuelle Gerät eine jeweilige Implementierungsklasse, in der Eigenschaften des jeweiligen virtuellen Geräts angegeben sind, die nicht in der Basisklasse beschrieben sind. Beispielsweise kann in einer solchen Implementierungsklasse definiert oder angegeben sein, aus welchen der elementaren Hardwarekomponenten das jeweilige virtuelle Gerät aufgebaut ist und wie, also in welcher Topologie diese Hardwarekomponenten zueinander angeordnet sind. Ebenso können hier angegeben sein, auf welcher Hierarchieebene sich das Gerät befindet, also Teil welches oder welcher hierarchisch höheren Geräte es ist und/oder welche hierarchisch untergeordneten Geräte es umfasst und/oder dergleichen mehr. Eine derartige klassenbasierte Implementierung der virtuellen Geräte ermöglicht es vorteilhaft, unterschiedliche digitale Nachbildungen der Anlage unter Verwendung derselben Ressourcen flexibel und dynamisch zu generieren, beispielsweise mit unterschiedlichen Ausstattungen oder Zuständen zu initialisieren, also in die digitale Nachbildung einzubinden. Dafür muss dann vorteilhaft nicht für jede Variante, also für jede unterschiedliche digitale Nachbildung eine eigene statische Implementierung von Null an manuell hergestellt werden.

In weiterer vorteilhafter Ausgestaltung der vorliegenden Erfindung umfasst das erfindungsgemäße System für jedes der virtuellen Geräte, bevorzugt auch für die elementaren Hardwarekomponenten, ein jeweiliges virtuelles graphisches 3D-Modell. Diese 3D-Modelle können beispielsweise in die beschriebenen Implementierungsklassen für die virtuellen Geräte eingebunden sein. Besonders bevorzugt können die 3D-Modelle dynamisch sein, also beispielsweise unterschiedliche Zustände einnehmen. Beispielsweise können Anzeigeelemente, wie etwa LEDs, Statusindikatoren oder dergleichen, ein- und ausschaltbar sein, Einzelteile, wie beispielsweise eine Klappe, eine Abdeckung, ein Hebel oder dergleichen in verschiedene Stellungen beweglich sein und/oder dergleichen mehr. Durch die virtuellen grafischen 3D-Modelle kann die digitale Nachbildung vorteilhaft besonders anschaulich und realistisch gestaltet werden und damit ein besonders intuitives und immersives virtuelles Training ermöglichen. Die 3D-Modelle können gemäß einer logischen und hierarchischen Struktur der virtuellen Geräte beziehungsweise der jeweiligen digitalen Nachbildung miteinander verbunden oder verknüpft werden, um diese Struktur und damit eine Funktionsweise der nachgebildeten Anlage dem jeweiligen Bedienpersonal für Trainingszwecke besonders anschaulich zugänglich zu machen.

Ein weiterer Aspekt der vorliegenden Erfindung ist ein Verfahren zum Bereitstellen einer digitalen oder virtuellen Nachbildung, also eines digitalen Zwillings, wenigstens eines Teils einer Anlage für ein virtuelles Training. In einem Verfahrensschritt des erfindungsgemäßen Verfahrens wird eine - insbesondere die genannte - Basisklasse bereitgestellt, die geräteunabhängig Funktionen und gegebenenfalls weitere Eigenschaften elementarer Hardwarekomponenten, die in unterschiedlichen Geräten verwendbar sind, implementiert. In einem weiteren Verfahrensschritt des erfindungsgemäßen Verfahrens wird eine - insbesondere die genannte - Bibliothek von in eine Hierarchie eingeordneten virtuellen Geräten oder Baugruppen bereitgestellt, von denen zumindest eines wenigstens eine der elementaren Hardwarekomponenten einbindet und die eine Topologie und ein funktionales Verhalten entsprechender realer Geräte oder Gegenstücke deterministisch nachbilden.

In einem weiteren Verfahrensschritt des erfindungsgemäßen Verfahrens wird ein vorgegebenes Trainingsszenario eingelesen. Dies kann ein Einlesen einer Projektierung der nachzubildenden technischen Anlage umfassen. Als Teil des Trainingsszenarios kann hier - ebenso wie im Zusammenhang mit dem erfindungsgemäßen System - beispielsweise angegeben sein, welche Komponenten, Geräte oder Teile der realen technischen Anlage nachgebildet werden sollen, in welchem Zustand sich diese befinden sollen - beispielsweise Betriebszustand, Einschaltstatus, Funktionsfähigkeit, Fehlerzustand oder dergleichen - und/oder welche Aufgabe oder Aufgaben im Rahmen des Trainings absolviert werden sollen.

In einem weiteren Verfahrensschritt des erfindungsgemäßen Verfahrens wird automatisch die digitale Nachbildung dynamisch aus den gemäß dem Trainingsszenario benötigten virtuellen Geräten und/oder elementaren Hardwarekomponenten generiert.

Das erfindungsgemäße Verfahren kann darüber hinaus im Zusammenhang mit dem erfindungsgemäßen System beschriebene Schritte, Maßnahmen oder Vorgänge als weitere, gegebenenfalls optionale, Verfahrensschritte umfassen.

Das erfindungsgemäße System kann zum Durchführen oder Ausführen des erfindungsgemäßen Verfahrens eingerichtet sein. Dementsprechend können zum Durchführen der Verfahrensschritte des erfindungsgemäßen Verfahrens die entsprechend im Zusammenhang mit dem erfindungsgemäßen System beschriebenen oder genannten Geräte oder Einrichtungen verwendet werden.

In vorteilhafter Weiterbildung der vorliegenden Erfindung wird die generierte digitale Nachbildung in eine virtuelle Trainingsumgebung eingebettet und diese virtuelle Trainingsumgebung an ein AR-Gerät (AR: augmentierte Realität) oder an ein VR-Gerät (VR: virtuelle Realität) ausgegeben. Derartige Geräte können beispielsweise eine Datenbrille, ein HMD (Head-Mounted Display), ein entsprechend ausgestatteter Raum oder dergleichen sein. Die virtuelle Trainingsumgebung kann einem Nutzer oder Betrachter, also beispielsweise dem zu trainierenden Bedienpersonal der Anlage, eine virtuelle räumliche Umgebung präsentieren, in der die digitale Nachbildung der Anlage dargestellt ist und interaktiv bedient oder manipuliert werden kann. In der virtuellen Trainingsumgebung können also beispielsweise Bedienabläufe oder Instandhaltungsmaßnahmen, wie beispielsweise ein Austausch eines Geräts oder dergleichen, virtuell nachvollzogen oder durchgeführt werden. Auf diese Weise wird ein besonders anschauliches und immersiv und damit besonders intensives und hochqualitatives Training ermöglicht, insbesondere ohne dabei die entsprechende reale Anlage durch Bedienungsfehler oder dergleichen zu gefährden oder einen Betrieb der realen Anlage unterbrechen zu müssen.

Im Vergleich zu einem Training an der realen Anlage kann das Training im der virtuellen Trainingsumgebung anhand der digitalen Nachbildung der Anlage dabei besonders zeiteffizient sein, da beispielsweise Vorgänge oder Abläufe, die in der Realität eine gewisse Zeit beanspruchen, in der virtuellen Trainingsumgebung wie beschrieben abgekürzt werden können. Beispielsweise kann bei einer komplexen der realen Anlage ein Herunterfahren oder ein Hochfahren der Anlage mehrere Minuten in Anspruch nehmen, während derer der jeweilige Nutzer keine weiteren Maßnahmen oder Bedienhandlungen durchführen kann. Dies kann in der virtuellen Trainingsumgebung beispielsweise auf einige Sekunden verkürzt werden, da hier lediglich der entsprechende Prozess repräsentiert werden muss. Derartige Zeiträume können in der virtuellen Trainingsumgebung also reduziert oder verkürzt werden, wodurch eine zeitliche Effizienz und eine Dichte des Trainings vorteilhaft verbessert werden kann.

Ein weiterer Aspekt der vorliegenden Erfindung ist ein Computerprogrammprodukt, dass Befehle oder Steueranweisungen umfasst, die bei ihrer Ausführung durch einen Computer, insbesondere ein erfindungsgemäßes System, diesen Computer dazu veranlassen, wenigstens eine Ausführungsform des erfindungsgemäßen Verfahrens, insbesondere automatisch oder teilautomatisch, durchzuführen oder auszuführen. Das Bereitstellen der Basisklasse und der Bibliothek kann dabei beispielsweise deren Erfassen oder Einlesen oder Laden in einen Datenspeicher und/oder deren Zugänglichmachen über eine Software- und/oder Hardwareschnittstelle oder durch Ausgeben eines Verweises, beispielsweise an eine Funktion oder Methode oder ein Programmodul oder ein Datenverarbeitungsgerät, beispielsweise einen für das Verfahren verwendeten Computer oder Prozessor oder dergleichen, bedeuten oder umfassen. Das erfindungsgemäße Computerprogrammprodukt kann also ein Computerprogramm sein. Ebenso kann das erfindungsgemäße Computerprogrammprodukt ein computerlesbarer Datenträger sein, auf dem ein derartiges Computerprogramm gespeichert ist.

Die bisher und im Folgenden angegebenen Eigenschaften und Weiterbildungen des erfindungsgemäßen Systems sowie die entsprechenden Vorteile sind jeweils sinngemäß auf die anderen Aspekte der Erfindung, also auf das erfindungsgemäße Verfahren und das erfindungsgemäße Computerprogrammprodukt, übertragbar und umgekehrt. Es gehören also zu der Erfindung auch solche Weiterbildungen dieser Aspekte der Erfindung, die Ausgestaltungen aufweisen, die hier zur Vermeidung unnötiger Redundanz nicht explizit in der jeweiligen Kombination oder nicht für jeden Aspekt der Erfindung separat beschrieben sind.

Weitere Merkmale, Einzelheiten und Vorteile der vorliegenden Erfindung ergeben sich aus der nachfolgenden Beschreibung bevorzugter Ausführungsbeispiele sowie anhand der Zeichnungen. Dabei zeigen:
- FIG 1: einen beispielhaften schematische Ablaufplan für ein Verfahren zum Bereitstellen eines virtuellen Training;
- FIG 2: eine schematische Darstellung zur Veranschaulichung eines virtuellen Geräts;
- FIG 3: eine schematische Darstellung zur Veranschaulichung eines hierarchischen Anlagenaufbaus;
- FIG 4: eine schematische Darstellung zur Veranschaulichung einer Signalflussstruktur für die Geräte des Anlagenaufbaus aus FIG 3;
- FIG 5: eine schematische Darstellung eines Peripherieracks, das mehrere hierarchisch untergeordnete Geräte umfasst; und
- FIG 6: eine schematische Darstellung zur Veranschaulichung einer Signalflussstruktur für die Geräte aus FIG 5;

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind gleiche, funktionsgleiche oder einander entsprechende Elemente jeweils mit den gleichen Bezugszeichen gekennzeichnet.

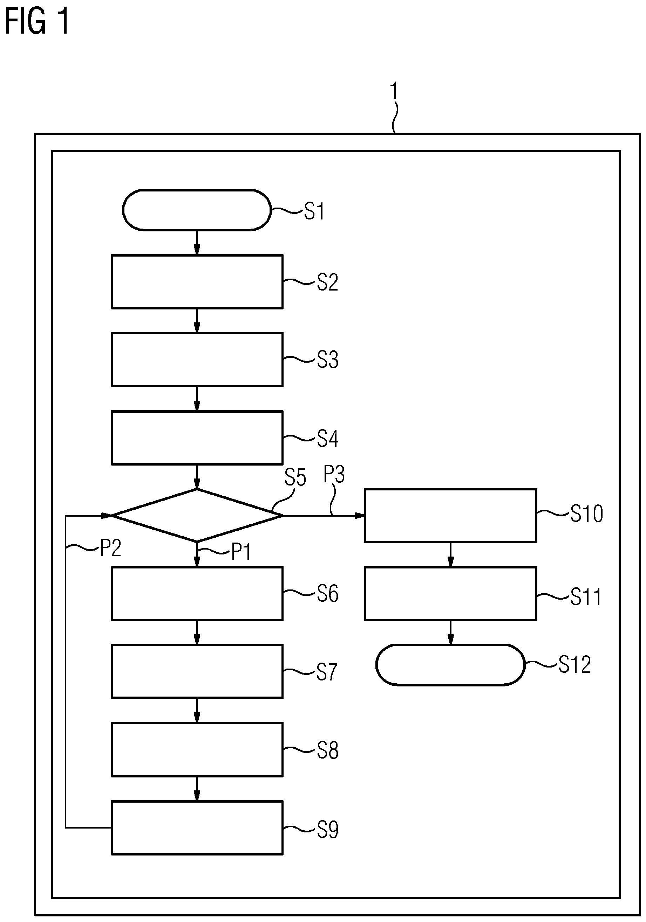

FIG 1 repräsentiert schematisch ein System 1 und ein Verfahren zum Bereitstellen einer digitalen Nachbildung einer technischen Anlage für Trainingszwecke. Das System 1 kann beispielsweise ein Computer sein mit einem Datenträger, auf dem ein das Verfahren implementierendes Computerprogramm gespeichert ist. Ein solches Computerprogramm ist hier in Form eines beispielhaften schematischen Ablaufplans repräsentiert. Das Verfahren und damit die Funktionalität oder Funktionsweise des Systems 1 soll im Folgenden unter Bezugnahme auch auf die übrigen Figuren erläutert werden.

In einem Verfahrensschritt S1 wird das Verfahren gestartet. Hier kann beispielsweise das System 1 in Betrieb genommen werden. Ebenso kann hier beispielsweise ein Trainingsszenario vorgegeben und durch das System 1 erfasst werden.

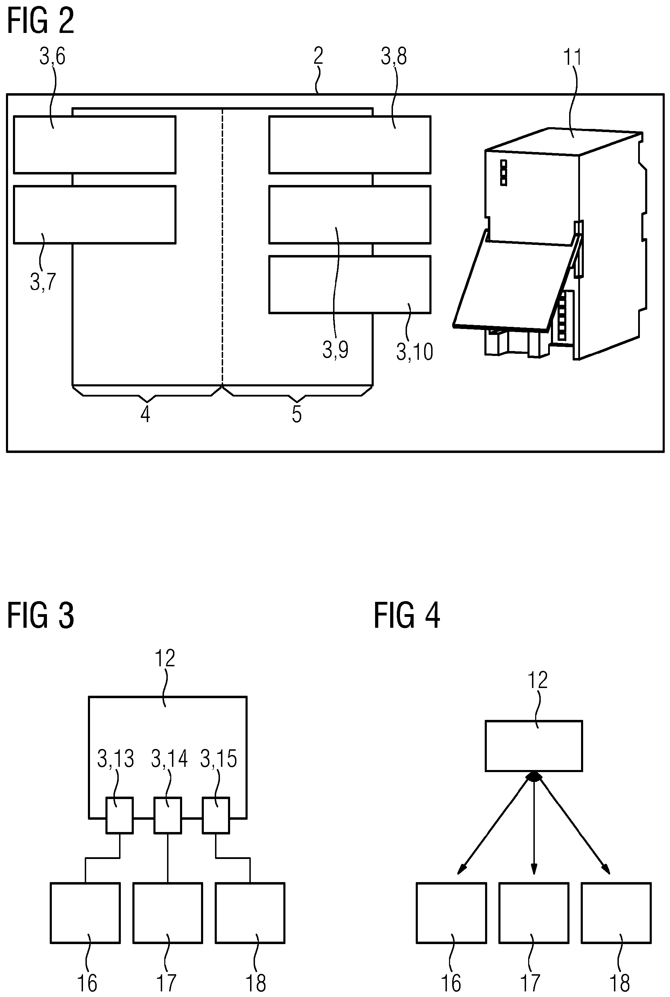

Im Verfahrensschritt S2 werden Anlagen- und Geräteinformationen erfasst. Hier können beispielsweise eine Projektierung einer nachzubildenden Anlage, eine Basisklasse die geräteunabhängig Funktionen elementarer Hardwarekomponenten 3 (vgl. FIG 2) implementiert und eine Bibliothek von virtuellen Geräten 2 (vgl. FIG 2), die eine Topologie und ein funktionales Verhalten entsprechender realer Geräte deterministisch nachbilden, eingelesen oder geladen werden. Die Basisklasse, beispielsweise bezeichnet als device.cs, kann also Kernfunktionen und Eigenschaften für alle relevanten Hardwarekomponenten 3 für die digitale Nachbildung und deren Verwendung in der VR-Trainingsumgebung enthalten.

Vorliegend kann es sich bei der nachzubildenden Anlage beispielsweise um ein Leittechniksystem für ein Kraftwerk, beispielsweise das Siemens SPPA-T3000 System, handeln. Diese Anlage ist aus einer Vielzahl einzelner Geräte und Komponenten aufgebaut, die jeweilige individuelle Funktionen und Eigenschaften haben und miteinander in einem Wirkungsoder Funktionsverbund stehen, also beispielsweise Signale miteinander austauschen können.

FIG 2 zeigt eine schematische Darstellung zur Veranschaulichung eines virtuellen Geräts 2. Das virtuelle Gerät 2 umfasst vorliegend mehrere elementare Hardwarekomponenten 3 und ist hier schematisch in einen Eingangsbereich 4 (Input) und einen Ausgangsbereich 5 (Output) gegliedert, auf die sich die Hardwarekomponenten 3 verteilen. Logisch und schaltungstechnisch können in dem Eingangsbereich 4 beispielsweise ein Rackanschluss 6, also ein Port zum Verbinden mit einem Rack, und ein Schalter 7 zum Einschalten und Ausschalten des virtuellen Geräts 2 angeordnet sein. In dem Ausgangsbereich 5 können entsprechend beispielsweise eine Statusanzeige 8, etwa in Form einer LED oder dergleichen, ein Phasenanschluss 9 und ein Erdungsanschluss 10, also entsprechende Ports zum Verbinden eines Stromkabels beziehungsweise zum Herstellen einer elektrischen Verbindung mit einem Energieversorgungsnetz, angeordnet sein.

Das virtuelle Gerät 2 kann beispielsweise ein Netzteil, wie etwa das Siemens PS327 sein. In entsprechender Art und Weise können aber eine Vielzahl unterschiedlicher Geräte virtuell repräsentiert sein. Welche Hardwarekomponenten 3 in welcher Anordnung das virtuelle Gerät 2 umfasst kann für jedes virtuelle Gerät 2 beispielsweise in einer jeweiligen Implementierungsklasse beschrieben sein, die beispielsweise als Teil der Bibliothek im Verfahrensschritt S2 geladen werden kann. Vorliegend umfasst das virtuelle Gerät 2 auch ein virtuelles graphisches 3D-Modell 11 oder einen Verweis auf dieses 3D-Modell 11, mittels welchem das virtuelle Gerät 2 in einer VR-Trainingsumgebung für einen jeweiligen Nutzer repräsentiert werden kann.

Die im Verfahrensschritt S2 erfassten Daten oder Informationen, beispielsweise in Form einer XML-Datei, werden in einem Verfahrensschritt S3 mittels eines Parsers des Systems 1 verarbeitet zu einer Liste von virtuellen Geräten 2 und Hardwarekomponenten 3, die eine hierarchische Struktur nachweisen. Durch den Parser kann also beispielsweise eine jeweils aktuelle bereitgestellte Projektierung, etwa für das SPPA-T3000 System, in eine derartige hierarchisch strukturierte Liste konvertiert werden.

FIG 3 zeigt eine schematische Darstellung zur Veranschaulichung eines hierarchischen Anlagenaufbaus. Auf einer obersten Hierarchieebene befindet sich hier ein Rack 12, das seinerseits als elementare Hardwarekomponenten 3 wenigstens einen ersten Port 13, einen zweiten Port 14 und einen dritten Port 15 aufweist. An diese Ports 13, 14, 15 sind Elemente einer niedrigeren Hierarchieebene angeschlossen. Vorliegend sind dies beispielsweise ein an den ersten Port 13 angeschlossenes Netzteil 16, ein an den zweiten Port 14 angeschlossener Prozessor 17 und ein an den dritten Port 15 angeschlossener Kommunikationsprozessor 18. Das Netzteil 16, der Prozessor 17 und/oder der Kommunikationsprozessor 18 können ihrerseits virtuelle Geräte 2 sein und dementsprechend ihrerseits elementare Hardwarekomponenten 3 aufweisen oder als elementare Hardwarekomponenten 3 behandelt werden.

Das Rack 12 stellt hier also eine hierarchisch übergeordnete Einheit dar, von der die hierarchisch untergeordneten Elemente 16, 17, 18 hierarchisch abhängig sind, sodass sich eine Patent-Child-Struktur (Mutter-Kind-Struktur) ergibt. Entsprechend gestaltet sich auch ein Signalfluss zwischen den Geräten beziehungsweise Komponenten 12, 16, 17, 18. FIG 4 zeigt hierzu eine schematische Darstellung zur Veranschaulichung des Signalflusses zwischen den Geräten oder Elementen 12, 16, 17, 18 des Anlagenaufbaus aus FIG 3. Eine Signalübermittlung an die Geräte oder Komponenten 16, 17, 18 erfolgt dabei ausgehend von dem hierarchisch übergeordneten Rack 12 oder über dieses. Dies kann insbesondere auch dann der Fall sein, wenn das Rack 12 mit den darin angeordneten oder gehaltenen Geräten oder Komponenten 16, 17, 18 seinerseits Teil eines hierarchisch noch höher angeordneten virtuellen Geräts 2 ist.

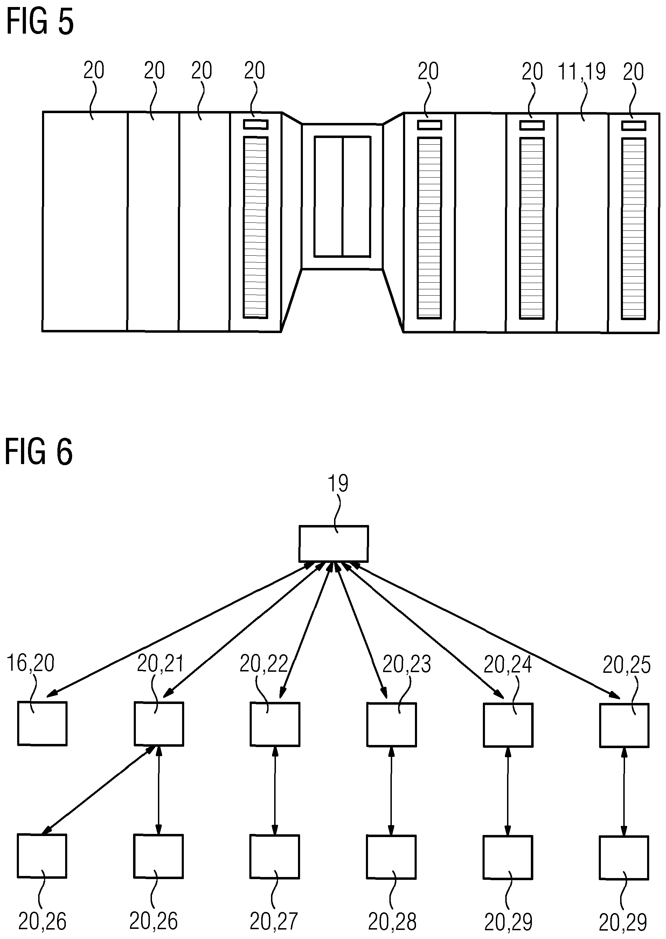

FIG 5 zeigt beispielhaft eine schematische Darstellung eines virtuellen grafischen 3D-Modells 11, vorliegend eines Peripherieracks 19. Dieses Peripherierack 19 umfasst als hierarchisch übergeordneten Einheit mehrere ihm hierarchisch untergeordnete Geräte 20. Auch das Peripherierack 19 und die untergeordneten Geräte 20 sind also in eine hierarchische Struktur eingebettet und eine Signalübertragung erfolgt entlang dieser Hierarchie- oder Baumstruktur, was schematisch in FIG 6 veranschaulicht ist. Hier bildet das Peripherierack 19 die oberste Hierarchieebene. Von dem Peripherierack 19 können dann Signale zu den untergeordneten Geräten 20 der nächsten Hierarchieebene übermittelt werden. Dies sind hier beispielsweise das Netzteil 16 sowie fünf Busmodule 21 bis 25.

Diese Busmodule 21 bis 25 können jeweils wiederum mit ihnen hierarchisch untergeordneten Geräten 20 kommunizieren. Für das erste Busmodul 21 sind dies beispielsweise zwei Interfacemodule 26, beispielsweise Siemens IM153-2-Module. Das zweite Busmodul 22 kann beispielsweise ein digitales Eingabe-Ausgabemodul, wie etwa Siemens SM323, umfassen oder mit diesem zur Signalübertragung verknüpft sein. Das dritte Busmodul 23 kann beispielsweise eine Trennbaugruppe 28 (englisch: Safety Protektor) umfassen oder mit dieser signalübertragend verknüpft sein. Das vierte Busmodul 24 und das fünfte Busmodul 25 können jeweils beispielsweise eine Eingangsbaugruppen 29, etwa Siemens SM326) umfassen beziehungsweise damit signalübertragend verknüpft oder verbunden sein.

Soll also beispielsweise ein Signal zwischen dem Peripherierack 19 und im digitalen Eingabe-Ausgabe-Modul 27 ausgetauscht werden, so würde dieses Signal vorliegend durch das zweite Busmodul 22 laufen oder entsprechend weitergeleitet werden. Ebenso kann das Peripherierack 19 beispielsweise ein Signal oder eine Aufforderung oder Anforderung an das erste Busmodul 21 senden. In dessen Implementierungsklasse oder einem entsprechenden Verhaltens-Skript für das erste Busmodul 21 kann dann festgelegt sein, wie dieses auf ein derartiges Signal reagieren soll. Dementsprechend reagiert das erste Busmodul 21 dann auf das von dem Peripherierack 19 gesendete Signal, führt also beispielsweise eine Schaltung aus oder konvertiert das Signal und erzeugt gegebenenfalls seinerseits ein Ausgabesignal, das es dann an beispielsweise eines der Interfacemodule 26 sendet.

Um die hierarchische Struktur und das Verhalten der einzelnen virtuellen Geräte 2 und Hardwarekomponenten 3 sowie der jeweils aus diesen gebildeten digitalen Nachbildung der Anlage entsprechend nachzubilden, werden hier bevorzugt das DOM sowie die individuellen Verhaltensweisen beschreibende Verhaltens-Skripte, die beispielsweise in C# geschrieben sein können, sowie die Basisklasse verwendet. Es sind hier also alle relevanten virtuellen Geräte 2 und Hardwarekomponenten 3 zumindest hinsichtlich ihrer Form und ihrer Topologie sowie ihres Verhaltens aus der physischen Realität digitalisiert, also in die virtuelle Realität übertragen.

Die Liste, die im Verfahrensschritt S3 erzeugt wurde und die beschriebene hierarchische Struktur der zu verwendenden virtuellen Geräte 2 und Hardwarekomponenten 3 angibt oder repräsentiert, wird dann abgearbeitet. Dazu wird beispielsweise in einem Verfahrensschritt S4 ein Wurzelelement der hierarchischen Struktur, also das hierarchisch höchste virtuelle Gerät 2, in einer Datenstruktur, beispielsweise einem Stapelspeicher (Stack), abgelegt. In einem Verfahrensschritt S5 wird abgefragt, ob die Datenstruktur wenigstens ein Element enthält oder leer ist. Enthält die Datenstruktur wenigstens ein Element, folgt das Verfahren einem Programmpfad P1 zu einem
Verfahrensschritt S6.

Im Verfahrensschritt S6 wird das oberste oder zuletzt hinzugefügte Element aus der Datenstruktur ausgelesen und dort gelöscht. In einem Verfahrensschritt S7 wird das Element instanziiert. In einem Verfahrensschritt S8 wird die erzeugte Instanz des Elements mit ihm zugeordneten Geräte- oder Komponenteninformationen verknüpft oder versehen, die beispielsweise im Verfahrensschritt S2 erfasst worden sind.

In einem Verfahrensschritt S9 werden gemäß der Geräte- oder Komponenteninformationen vorhandene Kinder, also untergeordnete Geräte 20 oder Hardwarekomponenten 3, des jeweiligen Elements erfasst und in der Datenstruktur gespeichert. Einem Programmpfad P2 folgend werden dann die Verfahrensschritte S5 bis S9 schleifenartig so lange durchlaufen bis die gesamte hierarchische Struktur beziehungsweise die gesamte Liste verarbeitet wurde und dementsprechend in einem Durchlauf des Verfahrensschritts S5 festgestellt wird, dass die Datenstruktur keine weiteren Elemente mehr enthält.

In einem solchen Fall folgt das Verfahren dann einem Programmpfad P3 zu einem Verfahrensschritt S10. Im Verfahrensschritt S10 werden die instanziierten Elemente, also virtuellen Geräte 2 beziehungsweise Hardwarekomponenten 3, in ihre laut dem jeweiligen Trainingsszenario vorgesehenen Zustände versetzt und so die virtuelle Trainingsumgebung bereitgestellt. Die virtuelle Trainingsumgebung kann dann zu einem Start des Trainings in einem Verfahrensschritt S11 beispielsweise an ein VR-Gerät ausgegeben werden.

Nach Abschluss des Trainings kann das Verfahren in einem Verfahrensschritt S12 beendet werden. Hier kann beispielsweise die Trainingsumgebung beziehungsweise die dafür erzeugte digitale Nachbildung der Anlage verworfen und das System 1 ausgeschaltet oder in einen Ausgangs- oder Bereitschaftszustand versetzt werden.

In der hier beschriebenen Art und Weise kann also für Trainingszwecke ein besonders flexibler und leicht anpassbarer digitaler Zwilling einer realen technischen Anlage erzeugt und bereitgestellt werden. Dies ist vorteilhaft unter Verwendung von digitalen Standardkomponenten möglich, die sich bedarfsgerecht kundenund anlagenspezifisch dynamisch auf verschiedene Weisen miteinander kombinieren oder verknüpfen lassen, um unterschiedliche Anlagen, Anlagenzustände, Modifikationen und/oder Trainingsszenarios darzustellen. So lässt sich mit besonders geringem Arbeit- und Kostenaufwand jeweils ein exaktes virtuelles oder digitales Abbild einer Anlage zusammensetzen, das nicht nur deren Topologie oder Aufbau, sondern auch deren Verhalten oder Funktionsweise nachbildet. Insbesondere ist dies, beispielsweise durch Verwendung der Standardkomponenten und des DOM für unterschiedlichste Anlagengrößen nahezu beliebig skalierbar. So kann eine preislich akzeptable Trainingsmöglichkeit mit im Vergleich zu nicht kunden- oder anlagenspezifisch angepassten statischen Trainingsanlagen deutlich erhöhtem Bezug zur jeweiligen realen Anlage ermöglicht werden. Dadurch, dass hier die digitale Nachbildung in einer VR-Trainingsumgebung und nicht etwa eine physische reale Trainings- oder Zwillingsanlage verwendet wird, kann zudem vorteilhaft ein permanentes Training direkt im Bereich der realen nachgebildeten Anlage erfolgen, wodurch sich in der Praxis verbesserte Trainingsmöglichkeiten ergeben.

## Patentansprüche

1. System (1) zum Bereitstellen einer digitalen Nachbildung wenigstens eines Teils einer Anlage für ein virtuelles Training, aufweisend einen Datenspeicher, in dem zumindest
a) eine Basisklasse, die geräteunabhängig Funktionen elementarer Hardwarekomponenten (3), die in unterschiedlichen Geräten verwendbar sind, implementiert, und
b) eine Bibliothek von virtuellen Geräten (2, 12, 19, 20), von denen zumindest eines wenigstens eine der elementaren Hardwarekomponenten (3) einbindet und die eine Topologie und ein funktionales Verhalten entsprechender realer Geräte deterministisch nachbilden, gespeichert sind, wobei
c) die virtuellen Geräte (2, 12, 19, 20) eine hierarchisch verschachtelte Struktur aufweisen, sodass ein hierarchisch höheres Gerät (2, 12, 19) wenigstens ein hierarchisch niedrigeres Gerät (20) und/oder wenigstens eine der elementaren Hardwarekomponenten (3) umfasst, und
d) das System (1) dazu eingerichtet ist, die digitale Nachbildung jeweils an ein vorgegebenes Trainingsszenario angepasst dynamisch aus den virtuellen Geräten (2, 12, 19, 20) und den elementaren Hardwarekomponenten (3) zu generieren; wobei
e) das System (1) einen Parser umfasst, der dazu eingerichtet ist, eine das vorgegebene Trainingsszenario und die nachzubildende Anlage beschreibende Datei auszulesen und daraus automatisch eine Liste der jeweiligen für das Trainingsszenario benötigten und in der Anlage enthaltenen Geräte (2, 12, 19, 20) und Hardwarekomponenten (3) mit hierarchischer Struktur zu erzeugen.

2. System (1) nach Anspruch 1, **dadurch gekennzeichnet, dass** gemäß der hierarchischen Struktur der virtuellen Geräte (2, 12, 19, 20) jedes virtuelle Gerät (2, 12, 19, 20) sofern vorhanden mit den ihm hierarchisch übergeordneten und untergeordneten virtuellen Geräten (2, 12, 19, 20) verknüpft ist, wobei über diese Verknüpfungen Signale zwischen virtuellen Geräten (2, 12, 19, 20) unterschiedlicher Hierarchieebenen übertragbar sind.

3. System (1) nach einem der vorhergehenden Ansprüche, **dadurch gekennzeichnet, dass** für jedes virtuelle Gerät (2, 12, 19, 20) individuell festgelegt ist, wie es auf welche Signale, die es von den ihm hierarchisch übergeordneten Geräten (2, 12, 19, 20) und/oder den ihm hierarchisch untergeordneten Geräten (2, 12, 19, 20) empfängt, reagiert.

4. System (1) nach einem der vorhergehenden Ansprüche, **dadurch gekennzeichnet, dass** das System (1) das Dokumenten-Objekt-Modell zum Implementieren der hierarchischen Struktur der virtuellen Geräte (2, 12, 19, 20) verwendet.

5. System (1) nach einem der vorhergehenden Ansprüche, **dadurch gekennzeichnet, dass** das funktionale Verhalten der virtuellen Geräte (2, 12, 19, 20) durch ein jeweiliges Script implementiert ist, wobei in den Scripten eine Reaktion des jeweiligen virtuellen Geräts (2, 12, 19, 20) auf ein an dieses Gerät (2, 12, 19, 20) gesendetes Signal beschrieben sind.

6. System (1) nach einem der vorhergehenden Ansprüche, **dadurch gekennzeichnet, dass** das System (1) für jedes virtuelle Gerät (2, 12, 19, 20) eine jeweilige Implementierungsklasse umfasst, in der Eigenschaften des jeweiligen virtuellen Geräts (2, 12, 19, 20) angegeben sind, die nicht in der Basisklasse beschrieben sind.

7. System (1) nach einem der vorhergehenden Ansprüche, **dadurch gekennzeichnet, dass** das System (1) für jedes der virtuellen Geräte (2, 12, 19, 20), bevorzugt auch für die elementaren HW-Komponenten (3), ein jeweiliges virtuelles graphisches 3D-Modell (11) umfasst.

8. Verfahren zum Bereitstellen einer digitalen Nachbildung wenigstens eines Teils einer Anlage für ein virtuelles Training, umfassend die Schritte:
a) Bereitstellen einer Basisklasse, die geräteunabhängig Funktionen elementarer Hardwarekomponenten (3), die in unterschiedlichen Geräten verwendbar sind, implementiert;
b) Bereitstellen einer Bibliothek von virtuellen Geräten (2, 12, 19, 20), von denen zumindest eines wenigstens eine der elementaren Hardwarekomponenten (3) einbindet und die eine Topologie und ein funktionales Verhalten entsprechender realer Geräte deterministisch nachbilden, gespeichert sind;
c) Organisieren der virtuellen Geräte (2, 12, 19, 20) in einer hierarchisch verschachtelten Struktur, sodass ein hierarchisch höheres Gerät (2, 12, 19) wenigstens ein hierarchisch niedrigeres Gerät (20) und/oder wenigstens eine der elementaren Hardwarekomponenten (3) umfasst;
d) Generieren der digitalen Nachbildung, jeweils an ein vorgegebenes Trainingsszenario angepasst, aus den virtuellen Geräten (2, 12, 19, 20) und den elementaren Hardwarekomponenten (3);
e) Verwenden eines Parsers, der dazu eingerichtet ist, eine das vorgegebene Trainingsszenario und die nachzubildende Anlage beschreibende Datei auszulesen und daraus automatisch eine Liste der jeweiligen für das Trainingsszenario benötigten und in der Anlage enthaltenen Geräte (2, 12, 19, 20) und Hardwarekomponenten (3) mit hierarchischer Struktur zu erzeugen.

9. Computerprogrammprodukt (1), umfassend Befehle, die bei ihrer Ausführung durch einen Computer diesen dazu veranlassen, ein Verfahren nach Anspruch 8 durchzuführen.

## Claims

1. System (1) for providing a digital replica of at least one part of an installation for a virtual training, having a data memory that stores at least
a) a base class, which implements, in a device-independent manner, functions of elementary hardware components (3) that are usable in different devices, and
b) a library of virtual devices (2, 12, 19, 20), at least one of which incorporates at least one of the elementary hardware components (3) and which deterministically replicate a topology and a functional behaviour of corresponding real devices, wherein
c) the virtual devices (2, 12, 19, 20) have a hierarchically interleaved structure, with the result that a hierarchically higher device (2, 12, 19) comprises at least one hierarchically lower device (20) and/or at least one of the elementary hardware components (3), and
d) the system (1) is configured to dynamically generate the digital replica from the virtual devices (2, 12, 19, 20) and the elementary hardware components (3) in a manner matched to a predefined training scenario in each case; wherein
e) the system (1) comprises a parser that is configured to read a file describing the predefined training scenario and the installation to be replicated and to automatically generate therefrom a list of the respective devices (2, 12, 19, 20) and hardware components (3) with a hierarchic structure that are needed for the training scenario and are included in the installation.

2. System (1) according to Claim 1, **characterized in that**, based on the hierarchic structure of the virtual devices (2, 12, 19, 20), each virtual device (2, 12, 19, 20), when present, is linked to its hierarchically superordinate and subordinate virtual devices (2, 12, 19, 20), these links being able to be used to transmit signals between virtual devices (2, 12, 19, 20) of different hierarchic levels.

3. System (1) according to either of the preceding claims, **characterized in that** there are individual stipulations for each virtual device (2, 12, 19, 20) regarding how said device reacts to which signals that it receives from its hierarchically superordinate devices (2, 12, 19, 20) and/or its hierarchically subordinate devices (2, 12, 19, 20).

4. System (1) according to one of the preceding claims, **characterized in that** the system (1) uses the document object model in order to implement the hierarchic structure of the virtual devices (2, 12, 19, 20).

5. System (1) according to one of the preceding claims, **characterized in that** the functional behaviour of the virtual devices (2, 12, 19, 20) is implemented by a respective script, a reaction of the respective virtual device (2, 12, 19, 20) to a signal transmitted to this device (2, 12, 19, 20) being described in the scripts.

6. System (1) according to one of the preceding claims, **characterized in that** the system (1) comprises a respective implementation class for each virtual device (2, 12, 19, 20), in which properties of the respective virtual device (2, 12, 19, 20) that are not described in the base class are indicated.

7. System (1) according to one of the preceding claims, **characterized in that** the system (1) comprises a respective virtual graphical 3D model (11) for each of the virtual devices (2, 12, 19, 20), preferably also for the elementary HW components (3).

8. Method for providing a digital replica of at least one part of an installation for a virtual training, comprising the steps of:
a) providing a base class, which implements, in a device-independent manner, functions of elementary hardware components (3) that are usable in different devices;
b) providing a library of virtual devices (2, 12, 19, 20), at least one of which incorporates at least one of the elementary hardware components (3) and which deterministically replicate a topology and a functional behaviour of corresponding real devices;
c) organizing the virtual devices (2, 12, 19, 20) in a hierarchically interleaved structure, with the result that a hierarchically higher device (2, 12, 19) comprises at least one hierarchically lower device (20) and/or at least one of the elementary hardware components (3);
d) generating the digital replica from the virtual devices (2, 12, 19, 20) and the elementary hardware components (3) in a manner matched to a predefined training scenario in each case;
e) using a parser that is configured to read a file describing the predefined training scenario and the installation to be replicated and to automatically generate therefrom a list of the respective devices (2, 12, 19, 20) and hardware components (3) with a hierarchic structure that are needed for the training scenario and are included in the installation.

9. Computer program product (1), comprising commands that, when executed by a computer, cause said computer to perform a method according to Claim 8.

## Revendications

1. Système (1) pour disposer d'une simulation numérique d'au moins une partie d'une installation pour un entraînement virtuel, comportant une mémoire de données, dans laquelle sont mises en mémoire au moins
a) une classe de base met en œuvre les fonctions, indépendamment des appareils, de composants (3) matériels élémentaires, qui peuvent être utilisés dans des appareils différents, et
b) une bibliothèque d'appareils (2, 12, 19, 20) virtuels, dont l'un au moins intègre au moins l'un des composants (3) matériels élémentaires et qui simule de manière déterministe une topologie et un comportement fonctionnel d'appareils réels correspondants, dans lequel
c) les appareils (2, 12, 19, 20) virtuels ont une structure imbriquée hiérarchiquement, de manière à ce qu'un appareil (2, 12, 19) plus haut hiérarchiquement comprenne au moins un appareil (20) plus bas hiérarchiquement et/ou au moins l'un des composants (3) matériels élémentaires, et
d) le système (1) est agencé pour créer la simulation numérique de manière adaptée respectivement à un scénario d'entraînement donné à l'avance, dynamiquement à partir des appareils (2, 12, 19, 20) virtuels et des composants (3) matériels élémentaires ; dans lequel
e) le système (1) comprend un analyseur, qui est agencé pour lire le scénario d'entraînement donné à l'avance et le fichier décrivant l'installation à simuler et en produire automatiquement avec structure hiérarchique une liste des appareils (2, 12, 19, 20) et des composants (3) matériels respectifs nécessaires pour le scénario d'entraînement et contenus dans l'installation.

2. Système (1) suivant la revendication 1, **caractérisé en ce que**, suivant la structure hiérarchique des appareils (2, 12, 19, 20) virtuels, chaque appareil (2, 12, 19, 20) virtuel est, dans la mesure où il est présent, combiné aux appareils (2, 12, 19, 20) virtuels, qui lui sont supérieurs hiérarchiquement et qui lui sont inférieurs hiérarchiquement, dans lequel, par ces combinaisons, des signaux peuvent être transmis entre des appareils (2, 12, 19, 20) virtuels de plans hiérarchiques différents.

3. Système (1) suivant l'une des revendications précédentes, **caractérisé en ce que**, pour chaque appareil (2, 12, 19, 20) virtuels, il est déterminé individuellement comment il réagit aux signaux qu'il reçoit des appareils (2, 12, 19, 20), qui lui sont supérieurs hiérarchiquement et/ou des appareils (2, 12, 19, 20), qui lui sont inférieurs hiérarchiquement.

4. Système (1) suivant l'une des revendications précédentes, **caractérisé en ce que** le système (1) utilise le modèle documentobjet pour la mise en œuvre de la structure hiérarchique des appareils (2, 12, 19, 20) virtuels.

5. Système (1) suivant l'une des revendications précédentes, **caractérisé en ce que** le comportement fonctionnel des appareils (2, 12, 19, 20) virtuels est mis en œuvre par un script respectif, dans lequel, dans les scripts est décrite une réaction de l'appareil (2, 12, 19, 20) virtuel respectif à un signal envoyé à cet appareil (2, 12, 19, 20).

6. Système (1) suivant l'une des revendications précédentes, **caractérisé en ce que** le système (1) comprend, pour chaque appareil (2, 12, 19, 20) virtuel, une classe respective de mise en œuvre, dans laquelle sont indiquées des propriétés de l'appareil (2, 12, 19, 20) virtuel respectif, qui ne sont pas décrites dans la classe de base.

7. Système (1) suivant l'une des revendications précédentes, **caractérisé en ce que** le système (1) comprend, pour chacun des appareils (2, 12, 19, 20) virtuels, de préférence également pour les composants (3) HW élémentaires, un modèle (11) en 3D graphique virtuel respectif.

8. Procédé pour disposer d'une simulation numérique d'au moins une partie d'une installation pour un entraînement virtuel, comprenant les stades :
a) mise à disposition d'une classe de base, qui met en œuvre les fonctions, indépendamment des appareils, de composants (3) matériels élémentaires, qui peuvent être utilisés dans des appareils différents ;
b) mise à disposition d'une bibliothèque d'appareils (2, 12, 19, 20) virtuels, dont l'un au moins intègre au moins l'un des composants (3) matériels élémentaires et qui simule, de manière déterministe, une topologie et un comportement fonctionnel d'appareils réels correspondants ;
c) organisation des appareils (2, 12, 19, 20) virtuels en une structure imbriquée hiérarchiquement, de manière à ce qu'un appareil (2, 12, 19) plus haut hiérarchiquement comprenne au moins un appareil (20) plus bas hiérarchiquement et/ou au moins l'un des composants (3) matériels élémentaires ;
d) création de la simulation numérique adaptée respectivement à un scénario d'entraînement donné à l'avance, à partir des appareils (2, 12, 19, 20) virtuels et des composants (3) matériels élémentaires ;
e) utilisation d'un analyseur, qui est agencé pour lire le scénario d'entraînement donné à l'avance et le fichier décrivant l'installation à simuler et en produire automatiquement avec structure hiérarchique une liste des appareils (2, 12, 19, 20) et des composants (3) matériels respectifs nécessaires pour le scénario d'entraînement et contenus dans l'installation.

9. Produit (1) de programme d'ordinateur, comprenant des instructions qui, lors de son exécution par un ordinateur, font que celles-ci exécutent un procédé suivant la revendication 8.
